## Europäisches Patentamt
## European Patent Office
## Office européen des brevets

(19)

(11) Numéro de publication: **0 009 450**
**B1**

(12) **FASCICULE DE BREVET EUROPEEN**

(45) Date de publication du fascicule de brevet: **09.12.81**

(51) Int. Cl.³: **G 01 T 1/20, G 01 T 1/29, G 21 C 17/06**

(21) Numéro de dépôt: **79400652.8**

(22) Date de dépôt: **18.09.79**

(54) **Détecteur de rayonnements gamma pour le contrôle d'aiguilles combustibles.**

(30) Priorité: **25.09.78 FR 7827348**

(43) Date de publication de la demande:
**02.04.80 Bulletin 80/7**

(45) Mention de la délivrance du brevet:
**09.12.81 Bulletin 81/49**

(84) Etats Contractants Désignés:
**BE CH DE GB IT NL SE**

(56) Documents cités:
**DE - A - 1 912 982**

(73) Titulaire: **COMMISSARIAT A L'ENERGIE ATOMIQUE Etablissement de Caractère Scientifique Technique et Industriel B.P. 510 F-75752 Paris Cedex 15 (FR)**

(72) Inventeur: **Aliotti, Ange La Pastourelle Bat. C 2 F-04100 Manosque (FR)**

(74) Mandataire: **Mongrédien, André et al, c/o Brevatome 25, rue de Ponthieu F-75008 Paris (FR)**

Courier Press, Leamington Spa, England.

Détecteur de rayonnements gamma pour le contrôle d'aiguilles combustibles.

La présente invention concerne un détecteur de rayonnements gamma pour le contrôle d'aiguilles combustibles. Ce détecteur de rayonnements gamma permet de déceler dans des aiguilles ou des crayons combustibles pour réacteurs nucléaires et qui sont constitués par un empilement de pastilles combustibles, la présence de certaines pastilles d'oxyde de plutonium et/ou d'uranium dont la teneur en plutonium et/ou en uranium serait hors spécifications.

On sait que, dans les réacteurs nucléaires du type "à neutrons rapides", le combustible se présente sous forme d'aiguilles constituées chacune par un empilement de pastilles d'oxyde mixte d'uranium et de plutonium; dans les réacteurs nucléaires de type "réacteurs à eau", le combustible nucléaire se présente sous la forme de crayons constitués chacun par un empilement de pastilles d'oxyde d'uranium enrichi. Il est important de contrôler les teneurs en plutonium et/ou en uranium de ces différentes pastilles car cette teneur conditionne la bonne marche des réacteurs et assure l'obtention de performances élevées. Il est essentiel pour cela que les crayons ou les aiguilles présentent une répartition homogène d'uranium ou de plutonium; ces crayons ou ces aiguilles doivent donc être contrôlés pastille par pastille, ce qui nécessite une très grande sensibilité de détection. Deux méthodes peuvent être utilisées pour contrôler à l'aide de détecteurs de rayonnement gamma, des aiguilles combustibles: d'une part, une méthode dite "passive" lorsque le contrôle est réalisé à partir de rayonnements gamma propres au combustible, et d'autre part une méthode dite "active" dans laquelle le contrôle est réalisé à partir de rayonnements gamma émis après irradiation du combustible par des neutrons.

On sait réaliser un détecteur de rayonnements gamma pour aiguilles combustibles; ce détecteur comprend un scintillateur annulaire, associé à des photomultiplicateurs. Ce détecteur annulaire est centré sur le crayon ou l'aiguille combustible qui traverse le détecteur grâce à des moyens de transport automatiques, soit directement dans le cas où le contrôle utilise la méthode passive, soit après traversée d'un irradiateur dans le cas où le contrôle utilise la méthode active. Les photomultiplicateurs qui sont en général au nombre de trois sont régulièrement répartis à la périphérie du scintillateur et sont reliés à des moyens de mesure, constitués par une électronique de comptage rapide qui enregistre les impulsions émises par les photomultiplicateurs à une cadence de l'ordre de 20 000 à 30 000 impulsions par seconde pour la méthode passive, et de l'ordre de 300 000 impulsions par seconde pour la méthode active. Ces moyens de mesure comprennent également un traceur de courbes ou une imprimante ainsi qu'un calculateur. Généralement, le scintillateur annulaire est associé à un collimateur dont l'ouverture est réglable en fonction de la longueur des pastilles à contrôler. La géométrie du scintillateur de forme annulaire, permet de déceler avec une cadence de contrôle élevée, une pastille dont la teneur en matière fissile (plutonium et/ou uranium enrichi) est hors spécifications. Une teneur trop élevée entraîne un risque de fusion locale du combustible et de rupture de la gaine qui l'entoure. Une teneur trop faible diminue les performances thermiques de l'aiguille combustible. En outre, cette géométrie annulaire permet d'éviter le rejet d'une aiguille ou d'un crayon dont toutes les pastilles ont une teneur correcte en uranium et/ou en plutonium.

La qualité du contrôle réalisé grâce à ces détecteurs dépend essentiellement de la stabilité du gain des photomultiplicateurs associés au scintillateur. Lorsqu'il y a une variation brusque du nombre de photons gamma, le gain des photomultiplicateurs subit une fluctuation importante; il en résulte que les signaux de sortie des photomultiplicateurs présentent une déformation importante et que leur amplitude n'est plus proportionnelle à l'énergie des photons gamma incidents. Afin de minimiser ces fluctuations de gain, des condensateurs sont placés en parallèle avec les dernières résistances du pont diviseur qui alimente les dynodes des photomultiplicateurs. Cependant, il faut un certain délai pour que chaque condensateur retrouve sa charge après avoir joué son rôle de stabilisateur. Il en résulte que la constante de temps que présente chaque association résistance-condensateur connectée sur la dynode des photomultiplicateurs, doit être d'autant plus faible que l'activité des rayonnements gamma y est plus élevée. Le pont diviseur de chaque photomultiplicateur présente alors un débit très important et les moyens électroniques de mesure branchés sur les photomultiplicateurs doivent pouvoir supporter des courants très importants. Ces moyens électroniques sont par conséquent très onéreux.

De plus, dans ce type de détecteur connu, comme le scintillateur de forme annulaire est constitué d'une seule pièce, un paquet de photons lumineux peut être vu par plusieurs photomultiplicateurs. Il en résulte que pour une forte activité des rayonnements gamma émis par le combustible, chaque photomultiplicateur fonctionne avec un taux de comptage très élevé et qu'ainsi tout dispositif de stabilisation de gain connecté sur le pont diviseur alimentant les dynodes des photomultiplicateurs, ne peut supprimer complètement la fluctuation provoquée par une brusque et importante variation du nombre des photons gamma incidents. En outre, le spectre observé sur un photomultiplicateur présente une importante altération de la résolution en énergie; cette altération est provoquée par l'absorption, variable en fonction du trajet, d'un certain nombre de photons lumineux dans le cristal constituant le scintillateur.

La présente invention a pour but de remédier à ces inconvénients et notamment de réaliser un détecteur de rayonnements gamma pour aiguilles combustibles permettant d'éviter qu'un même paquet de photons lumineux puisse être capté par plusieurs photomultiplicateurs. Il en résulte une réduction considérable des fluctuations de gain des photomultiplicateurs, la réduction du débit du pont diviseur connecté sur chaque photomultiplicateur ainsi qu'une amélioration de la résolution en énergie du détecteur.

L'invention a pour objet un détecteur de rayonnements gamma pour le contrôle d'aiguilles combustibles, comprenant un scintillateur annulaire associé à des photomultiplicateurs reliés à des moyens de mesure, caractérisé en ce que le scintillateur annulaire est divisé en secteurs isolés optiquement les uns des autres, chacun de ces secteurs étant équipé d'un photomultiplicateur.

Selon un mode de réalisation préféré de l'invention, le détecteur de rayonnements gamma comprend en outre un diaphragme annulaire apte à collimater le rayonnement provenant de chaque pastille contenue dans l'aiguille combustible contrôlée.

Selon une autre réalisation avantageuse de l'invention, le diaphragme est à ouverture réglable.

Selon une autre réalisation de l'invention, le scintillateur annulaire est un scintillateur à iodure de sodium, activé au Thallium.

Selon une autre réalisation de l'invention, les secteurs du scintillateurs sont isolés optiquement par une couche d'alumine.

Selon une autre réalisation avantageuse, les secteurs sont identiques.

Enfin, selon une réalisation préférée, le scintillateur et le diaphragme sont situés dans une enceinte blindée de protection contre les rayonnements gamma extérieurs au détecteur.

Les caractéristiques et avantages de l'invention ressortiront mieux de la description qui va suivre, donnée à titre purement illustratif et non limitatif, en référence aux dessins annexés dans lesquels:

— la fig. 1 est une vue schématique d'un détecteur de rayonnements gamma pour aiguilles combustibles de type connu, selon un plan perpendiculaire à l'axe de ce détecteur;

— la fig. 2 est une vue schématique d'un détecteur de rayonnements gamma pour aiguilles combustibles, conforme à l'invention, selon un plan perpendiculaire à l'axe de ce détecteur;

— la fig. 3 est une vue schématique du détecteur conforme à l'invention, ce détecteur étant représenté dans son enceinte blindée, selon un plan parallèle à son axe.

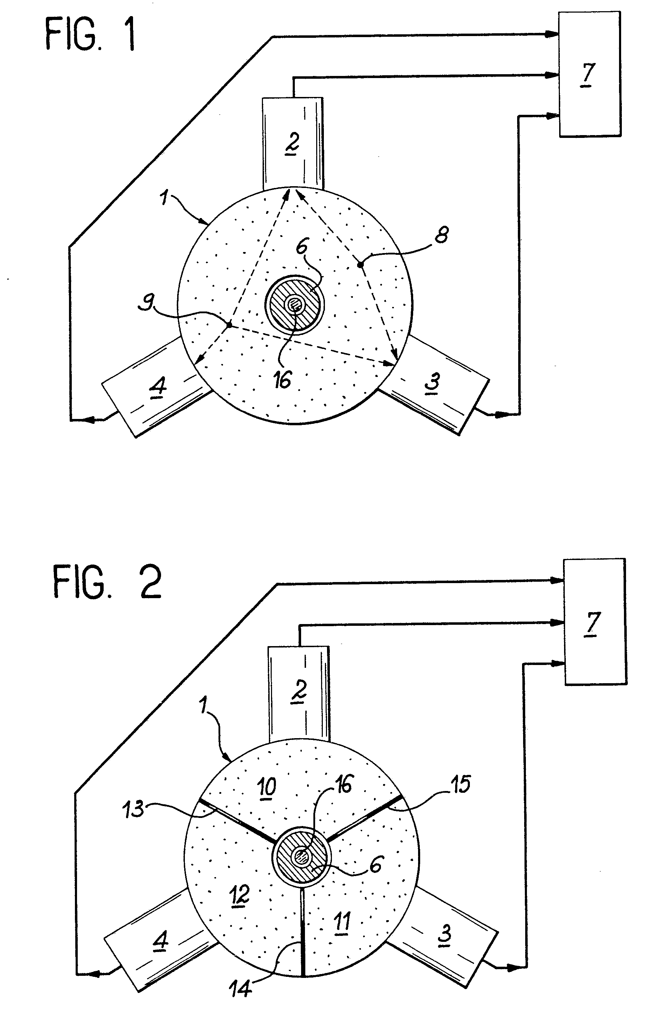

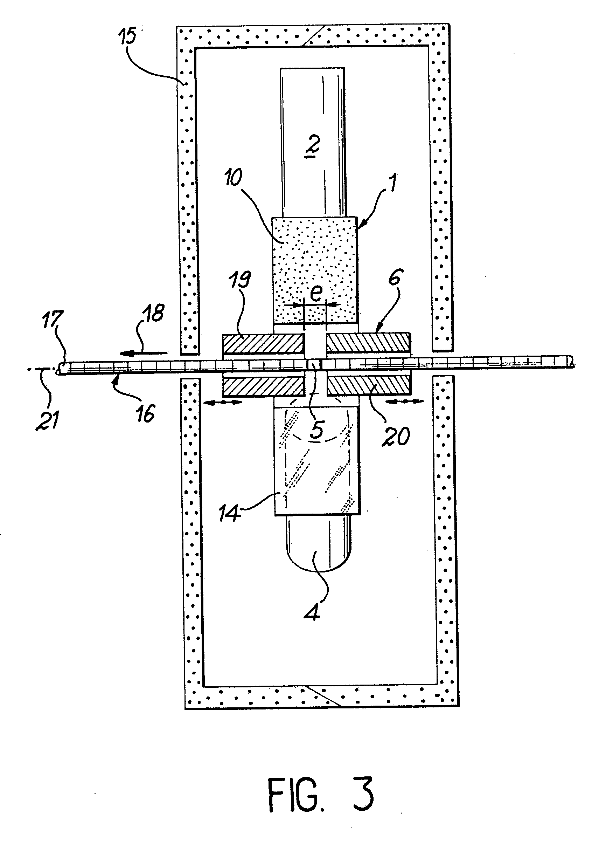

En référence à la fig. 1, on a représenté de manière schématique un détecteur de rayonnements gamma pour aiguilles combustibles, de type connu, selon un plan perpendiculaire à l'axe de ce détecteur. Ce détecteur de type connu comprend un scintillateur 1, de forme annulaire, associé à des photomultiplicateurs 2, 3, 4. Ce détecteur permet de contrôler la teneur en plutonium et/ou en uranium d'un combustible nucléaire se présentant sous forme de crayon ou d'aiguille 16, constitué d'un empilement de pastilles de combustibles d'oxyde d'uranium et/ou d'oxyde de plutonium. Il comprend également un diaphragme ou collimateur 6, dont la forme sera mieux précisé à l'aide de la fig. 3, et dont le rôle est de limiter à environ la longueur de chaque pastille de combustible le flux de rayonnements gamma émis par cette pastille en direction du scintillateur 1. Les photomultiplicateurs 2, 3, 4, dont le nombre a été limité à trois, sont régulièrement répartis à la périphérie du scintillateur annulaire 1 et leurs sorties sont reliées à des moyens électroniques de mesure. Il est bien évident cependant que les photomultiplicateurs peuvent être répartis de manière différente. Les moyens électroniques de mesure qui n'ont pas été représentés en détail comprennent généralement des circuits électroniques de comptage d'impulsions, associés à un traceur de courbes ou à une imprimante ainsi qu'à un calculateur.

Comme on l'a mentionné plus haut, un paquet de photons gamma tel que 8 ou 9, résultant de l'émission de rayonnements gamma par une pastille de l'aiguille 16 peut être capté par plusieurs photomultiplicateurs. Ainsi par exemple, le paquet 8 de photons gamma peut être capté par les photomultiplicateurs 2, 3 tandis que le paquet 9 de photons gamma peut être capté en même temps par les trois photomultiplicateurs. Il en résulte donc les inconvénients déjà mentionnés précédemment.

En référence à la fig. 2, on a représenté un détecteur conforme à l'invention. Les mêmes éléments portent les mêmes références sur cette figure et sur la fig. 1. Ce détecteur comprend un scintillateur de forme annulaire 1, divisé en secteurs identiques 10, 11, 12, isolés optiquement, et auxquels correspondent respectivement les photomultiplicateurs 2, 3, 4; ce scintillateur est de préférence du type à iodure de sodium, activé au Thallium; les différents secteurs du scintillateur sont isolés optiquement par des couches 13, 14, 15 d'un isolant optique tel que l'alumine. Un diaphragme annulaire 6 permet de collimater le rayonnement provenant d'une pastille de l'aiguille combustible 16 de manière à limiter à environ la longueur de cette pastille, le flux du rayonnement émis. Les sorties des photomultiplicateurs sont reliées à des moyens de mesure 7, constitués par exemple par des circuits électroniques de comptage associés à un traceur de courbes ou à une imprimante ainsi qu'à un calculateur, non représentés. Le diaphragme 6 est, comme on le verra par la suite, un diaphragme à ouverture réglable, de forme annulaire. Ce détecteur est enfermé dans une enceinte blindée de protection contre les rayonnements gamma extérieurs au détecteur; cette enceinte n'est pas représentée sur la figure, elle sera décrite plus loin en détail. Les différents secteurs du scintillateur 1 sont séparés optiquement par des couches 13, 14, 15 d'un isolant optique tel que l'alumine, qui empêchent qu'un paquet de photons gamma résultant du rayonnement émis par une pastille ne soit capté par plusieurs photomultiplicateurs en même temps. Comme on l'a vu plus haut, ceci évite des fluctuations importantes du gain des photomultiplicateurs et améliore la résolution en énergie. Les secteurs 10, 11 et 12 du scintillateur pourraient ne pas être identiques.

En référence à la fig. 3 on a représenté de manière schématique le détecteur de la fig. 2, représenté dans une enceinte blindée 15' le protégeant contre les rayonnements gamma extérieurs qui pourraient venir perturber les mesures. Ce détecteur est représenté en coupe, selon un plan parallèle à son axe. Les mêmes éléments portent les mêmes références sur cette figure et sur la fig. 2. L'enceinte blindée 15' est une enceinte épaisse en plomb. On n'a pas représenté sur cette figure les moyens de mesure connectés aux photomultiplicateurs 2 et 4. Comme on l'a indiqué plus haut, ce détecteur permet le contrôle d'une aiguille ou d'un crayon 16 par la mesure des rayonnements gamma émis par les pastilles 5 de combustible nucléaire contenues dans une gaine 17. Ces pastilles constituées d'oxyde d'uranium et/ou de plutonium, ont une teneur en uranium et/ou en plutonium qui est contrôlée grâce au détecteur de l'invention par déplacement de l'aiguille ou du crayon 16, dans la direction 18. Il est bien évident que l'une des méthodes mentionnées plus haut, soit active, soit passive, peut être utilisée. Le diaphragme 6 est constitué de deux pièces annulaires 19, 20 opaques aux rayonnements gamma; ces pièces ont un écartement *e* qui peut être réglé par des moyens non représentés, en fonction de la longueur des pastilles 5 à contrôler. Ces deux pièces opaques aux rayonnements gamma permettent de limiter à environ la longueur d'une pastille le flux des rayons gamma émis en direction du scintillateur 1. Le déplacement de l'aiguille ou du crayon 16 s'effectue bien entendu dans l'axe 21 du détecteur. La possibilité de régler l'ouverture *e* du diaphragme 6 permet de se placer dans des conditions optimales correspondant à un compromis entre la longueur des pastilles et la cadence de contrôle.

## Revendications

1. Détecteur de rayonnements gamma pour le contrôle d'aiguilles combustibles (16), comprenant un scintillateur annulaire (1) associé à des photomultiplicateurs (2, 3, 4) reliés à des moyens de mesure (7), caractérisé en ce que le scintillateur annulaire (1) est divisé en secteurs (10, 11, 12) isolés optiquement les uns des autres, chacun de ces secteurs étant équipé d'un photomultiplicateur (2, 3, 4).

2. Détecteur de rayonnements gamma, selon la revendication 1, caractérisé en ce qu'il comprend en outre un diaphragme annulaire (6) apte à collimater le rayonnement provenant de chaque pastille contenue dans l'aiguille combustible (16) controlée.

3. Détecteur de rayonnements gamma selon la revendication 2, caractérisé en ce que le diaphragme (6) est à ouverture réglable.

4. Détecteur de rayonnements gamma selon la revendication 3, caractérisé en ce que le scintillateur annulaire (1) est un scintillateur à iodure de sodium activé au Thallium.

5. Détecteur de rayonnements gamma selon la revendication 4, caractérisé en ce que les secteurs (10, 11, 12) du scintillateur sont isolés optiquement par une couche d'alumine.

6. Détecteur de rayonnements gamma selon la revendication 5, caractérisé en ce que les secteurs (10, 11, 12) sont identiques.

7. Détecteur de rayonnements gamma selon la revendication 6, caractérisé en ce que le scintillateur (1) et le diaphragme (6) sont situés dans une enceinte blindée (15') de protection contre les rayonnements gamma extérieurs au détecteur.

## Patentansprüche

1. Gammastrahlendetektor zur Steuerung von Brennstäben (16), mit einem ringförmigen Szintillator (1), der mit einer Messeinrichtung (7) verbundenen Photomultiplikatoren (2, 3, 4) zugeordnet ist, dadurch gekennzeichnet, dass der ringförmige Szintillator (1) in optisch voneinander getrennte Sektoren (10, 11, 12) unterteilt ist, wobei jeder dieser Sektoren mit einem Photomultiplikator (2, 3, 4) versehen ist.

2. Gammastrahlendetektor nach Anspruch 1, gekennzeichnet, durch eine ringförmige Blende (6), die die Strahlung richten kann, die von jeder im gesteuerten Brennstab (16) enthaltenen Brennstofftablette ausgeht.

3. Gammastrahlendetektor nach Anspruch 2, dadurch gekennzeichnet, dass der Blende (6) eine regelbare Öffnung hat.

4. Gammastrahlendetektor nach Anspruch 3, dadurch gekennzeichnet, dass der ringförmige Szintillator (11) ein mit Thallium aktivierter Szintillator mit Jodnatrium ist.

5. Gammastrahlendetektor nach Anspruch 4, dadurch gekennzeichnet, dass die Sektoren (10, 11, 12) des Szintillators durch eine Schicht aus Aluminiumoxid optisch isoliert sind.

6. Gammastrahlendetektor nach Anspruch 5, dadurch gekennzeichnet, dass die Sektoren (10, 11, 12) identisch sind.

7. Gammastrahlendetektor nach Anspruch 6, dadurch gekennzeichnet, dass der Szintillator (1) und die Blende (6) in einem Schutzbehälter (15') angeordnet sind, der gegen die ausser-

halb des Detektors herrschende Gamma-strahlung abgekapselt ist.

## Claims

1. Gamma-ray detector for monitoring nuclear fuel rods (16) comprising an annular scintillator (1) associated with photomultipliers (2, 3, 4) connected to measuring means (7) characterised in that the annular scintillator (1) is divided into sectors (10, 11, 12) which are optically separate from one another, each of the sectors being provided with a photomultiplier (2, 3, 4).

2. Gamma-ray detector according to Claim 1 characterised in that it additionally comprises an annular diaphragm (6) adapted to collimate the radiation provided by each section of the fuel rod (16) being monitored.

3. Gamma-ray detector according to Claim 2 characterised in that the diaphragm (6) has an adjustable opening.

4. Gamma-ray detector according to Claim 3 characterised in that the annular scintillator (11) is a thallium-activated sodium iodide scintillator.

5. Gamma-ray detector according to Claim 4 characterised in that the sectors (10, 11, 12) of the scintillator are optically separated by a layer of allumina.

6. Gamma-ray detector according to Claim 5 characterised in that the sectors (10, 11, 12) are identical.

7. Gamma-ray detector according to Claim 6 characterised in that the scintillator (1) and the diaphragm (6) are located in a shielded enclosure (15′) for protection against gamma radiation external of the detector.

FIG. 1

FIG. 2

1

FIG. 3